# EUROPÄISCHE PATENTSCHRIFT

(11) **EP 0 519 195 B1**
(45) Veröffentlichungstag und Bekanntmachung des Hinweises auf die Patenterteilung: **24.01.1996**
(21) Anmeldenummer: 92107638.6
(22) Anmeldetag: 06.05.1992
(51) Int. Cl.: A61C 9/00

(54) **Verfahren zum Herstellen eines Abdruckes von einem bezahnten menschlichen Kiefer**
Method for forming dental impressions
Procédé pour la prise des empreintes dentaires

(30) Priorität: 17.05.1991 DE 4116109; 31.01.1992 DE 4202676
(43) Veröffentlichungstag der Anmeldung: 23.12.1992
(73) Patentinhaber: Schreinemakers, Josephus, Prof., NL-6026 BX Maarheeze (NL)
(72) Erfinder: Schreinemakers, Josephus, Prof., NL-6026 BX Maarheeze (NL)
(74) Vertreter: Andrejewski, Walter, Dr.

(56) Entgegenhaltungen:
- DE-A- 3 344 774
- GB-A- 792 070
- US-A- 2 311 158
- US-A- 2 452 866

## Beschreibung

Die Erfindung betrifft ein Verfahren zum Herstellen eines Abdruckes von einem bezahnten menschlichen Kiefer, - mit den Merkmalen aus dem Oberbegriff des Patentanspruches 1. Ein Abdrucklöffel zum Herstellen eines Abdruckes von einem Unterkiefer weist einen mundvorhofseitigen Rand und einen zungenseitigen Rand auf, während ein Abdrucklöffel zum Herstellen eines Abdruckes von einem Oberkiefer einen mundvorhofseitigen Rand und einen palatinalen Rand besitzt. Unbewegliche Schleimhäute sind beispielsweise das Zahnfleisch, bewegliche Schleimhäute sind beispielsweise Wangen- und Lippenschleimhäute. Eine aushärtbare Abdruckmasse ist im ungehärteten Zustand eine viskose Substanz, welche gegossen, geknetet oder mit Spateln gemischt werden kann, und im ausgehärteten Zustand meistens ein elastischer, gummiartiger Feststoff. - In der Praxis und teilweise auch in dieser Anmeldung wird der Ausdruck Abdruck auch durch Abformung ersetzt. Man spricht von Abformmassen und von Abformlöffeln.

Ein Verfahren der eingangs genannten Art ist aus der Literaturstelle DE-PS 33 44 774 bekannt. Das insofern bekannte Verfahren wird mit Hilfe eines Abdrucklöffels durchgeführt, dessen mundvorhofseitiger Rand und zungenseitiger bzw. palatinaler Rand so geformt sind, daß diese beim Aufdrücken des Abdrucklöffels auf die Zahnreihe des Kiefers gegenüber den beweglichen Schleimhäuten wie eine Dichtleiste funktionieren. Zum Abdrucknehmen wird der in der Literaturstelle DE-PS 33 44 774 beschriebene Abdrucklöffel mit einer aushartbaren Abdruckmasse gefüllt und mit seinen Rändern jenseits der Aktionsgrenze im Bereich der beweglichen Schleimhäute auf den Kiefer aufgedrückt. Zwischen dem Kiefer des Patienten und dem Abdruckloffel ist bei aufgedrücktem Abdrucklöffel ein abgedichteter Formraum gegeben. Daraufhin wird die Abdruckmasse in diesem Formraum unter Druck gesetzt, indem die beweglichen Schleimhäute vom Patienten mobilisiert werden. Um eine hydraulische Druckerhöhung zu erreichen, wird der Patient bei der Abdrucknahme eines Unterkieferabdruckes veranlaßt, die Zunge vorzustrecken, bei der Abdrucknahme eines Oberkieferabdruckes wird der Patient veranlaßt, die Oberlippe und die Wangen nach unten zu ziehen. Die Abdruckmasse kann wegen der Dichtfunktion der Ränder des Abdrucklöffels nur erschwert entweichen. Die Druckerhöhung bewirkt ein Vordringen der Abdruckmasse in Höhlungen und Spalte vor dem Aushärten der Abdruckmasse. Nach dem Aushärten der Abdruckmasse und Entfernen des Abdrucklöffels wird ein Abdruck mit guter Detailtreue erhalten.

Dieses Verfahren hat sich an und für sich bewährt. Die Praxis hat jedoch gezeigt, daß mit dem insoweit bekannten Verfahren erhaltene Abdrücke hinsichtlich der Wiedergabe der Kieferform zwar relativ präzise, jedoch in mikroskopischer Hinsicht noch nicht immer optimal detailtreu sind. Ursache hierfür ist, daß Abdrucklöffel in einer oder in wenigen Standardformen bzw. Größen hergestellt werden, jeder menschliche Kiefer demgegenüber aber rein individuelle Strukturen aufweist. Daher ist die Dichtfunktion der Ränder des Abdrucklöffels nicht immer optimal gewährleistet und in einem solchen Falle reicht der Druckaufbau nicht aus, um die Abdruckmasse auch in kleinere und/oder verwinkelte Höhlungen bzw. Spalte zu pressen. Der Vorteil des bekannten Verfahrens, relativ präzise Abdrucke zu produzieren, geht aber auch in Hand mit einem Nachteil, welcher um so erheblicher wird, je detailtreuer der Abdruck ist. Sobald die Abdruckmasse ausgehärtet ist, ist der Kiefer in einem elastischen Festkörper gleichsam eingebettet unter Einbeziehung von Höhlungen, Spalten und Hinterschneidungen. Die für das Verfahren eingesetzten Abdruckmassen härten auf Hartewerte von 35 Shore A oder mehr aus und es ist deshalb nur unter hohem Kraftaufwand und unter erheblichem Unbehagen beim Patienten möglich, den Abdruck vom Kiefer zu entfernen.

Der Erfindung liegt die Aufgabe zugrunde, ein Verfahren anzugeben, mit dem unabhängig von der individuellen Kieferform Abdrucke mit gleichbleibender und sehr hoher Präzision und Detailtreue erhalten werden, welche leicht vom Kiefer entfernbar sind. Der Erfindung liegt die weitere Aufgabe zugrunde, Abdruckmassen anzugeben, die für das erfindungsgemäße Verfahren benötigt werden.

Diese Aufgabe wird durch die Merkmalskombination des Patentanspruches 1 gelöst.

In dem der Abdrucknahme vorgeschalteten Individualisierungs-Verfahrensabschnitt wird ein beispielsweise aus Metall gefertigter Abdrucklöffel mit nur wenig elastischen Rändern versehen, welche aus der ausgehärteten hochviskosen Abdruckmasse bestehen und der individuellen Kieferform des Patienten exakt angepaßt sind. Die Ränder eines solchermaßen voll individualisierten Abdrucklöffels sind aufgrund ihrer optimalen Anpassung an den individuellen Kiefer sowie ihrer Elastizität eine optimale Dichtung. In dem folgenden Präzisionsabdrucknahme-Verfahrensabschnitt, wobei der Formmantel des individualisierten Abdrucklöffels mit einer niederviskosen aushärtbaren Abdruckmasse gefüllt wird und der voll individualisierte Abdrucklöffel dann mit seinen Rändern jenseits der Aktionsgrenze an den beweglichen Schleimhäuten anliegend auf den Kiefer aufgedrückt wird, ist die niederviskose Abdruckmasse durch die elastischen und optimal angepaßten Ränder des voll individualisierten Abdrucklöffels dicht eingeschlossen. In der Endphase der Positionierung im Mund, wenn die Abbremsungstätigkeit am Rande gegen Entweichen von überschüssiger Masse den höchsten Wert erreicht, herrscht ein beachtlicher Staudruck. Wird nun der Patient dazu veranlaßt, die beweglichen Schleimhäute zu mobilisieren, erfolgt eine Verstärkung des hydraulischen Druckaufbaus auf die niederviskose Abdruckmasse im Formmantel, wodurch die Abdruckmasse einwandfrei auch in kleine und verwinkelte Höhlungen und Spalten hineingedrückt wird, bevor alle überschüssige Menge der Abdruckmasse dem Formraum entweichen kann. Nach dem Aushärten der niederviskosen Abdruckmasse wird ein Abdruck von sehr hoher Präzision und Detailtreue erhalten. Erfindungsgemäß ist ein solcher Präzisionsabdruck besonders leicht vom Kiefer zu entfernen, da das Aushärten der niederviskosen Abdruckmasse nach der Maßgabe erfolgt, daß eine Endhärte von 30 Shore A nicht überschritten wird. Beim Entfernen der Abdruckmasse sind nur geringe Kräfte erforderlich, um jene Bereiche des Abdruckes, welche in Höhlungen und/oder Spalten bzw. Hinterschneidungen ausgehärtet sind, unter elastischer Deformation abzuziehen. Nach dem Entfernen der Abdruckmasse vom Kiefer kehren die elastisch deformierten Bereiche aufgrund des Rückstellvermögens der Abdruckmasse in die Form des Kiefers zurück.

In einer vorteilhaften Ausführungsform des erfindungsgemäßen Verfahrens wird in dem Individualisierungs-Verfahrensabschnitt die hochviskose aushärtbare Abdruckmasse wulstförmig umlaufend auf den mundvorhofseitigen Rand sowie den zungenseitigen bzw. palatinalen Rand des Abdrucklöffels aufgetragen. - Diese Ausführungsform zeichnet sich dadurch aus, daß nur wenig Zeit und eine geringe Menge der hochviskosen Abdruckmasse zur Durchführung des Individualisierungs-Verfahrensabschnittes benötigt werden. Die Abdruckmasse kann wulstförmig umlaufend auf die Ränder aufgetragen werden, indem beispielsweise die hochviskose Abdruckmasse zunächst mit der Hand gleichsam zu einem dünnen Strang geknetet wird, welcher dann umlaufend auf die Ränder des Abdrucklöffels aufgedrückt wird.

Optimierende Einzelheiten sind Gegenstand der Patentansprüche 3 bis 5.

Um die Präzision des Abdruckes (anders ausgedrückt der Abformung), insbesondere in bezug auf die sulci marginales an den Zähnen der Patienten weiter zu verbessern, lehrt die Erfindung, daß zur Vorbereitung des folgenden Präzisionsabformungs-Verfahrensschrittes der Rinnenboden des rinnenbodenförmigen Formmantels zuerst in einem Vorbereitungs-Verfahrensschritt mit einer knetbaren und aushärtbaren Abformmasse bekleidet wird, daß in einem folgenden Präzisionsabformungs-Verfahrensabschnitt auf diese knetbare Abformmasse des Abformlöffels eine weniger viskose, aushärtbare Abformmasse aufgebracht und der Formmantel damit gefüllt wird, wobei der so vorbereitete Abformlöffel danach mit dem mundvorhofseitigen Rand sowie dem zungenseitigen bzw. palatinalen Rand jenseits der Aktionsgrenze an den beweglichen Schleimhäuten anliegend auf den Kiefer unter Überwindung des sich ausbildenden Staudruckes aufgedrückt wird und der Patient danach veranlaßt wird, die beweglichen Schleimhäute zu mobilisieren, und daß nach dem Aushärten der knetbaren Abformmasse und der weniger viskosen Abformmasse der individualisierte Abformlöffen zusammen mit der knetbaren Abormmasse und der weniger viskosen Abformmasse vom Kiefer entfernt wird, wobei das Aushärten der beiden Abformmassen mit der Maßgabe erfolgt, daß eine Endhärte von 30 Shore A nicht überschritten wird.

Zweckmäßigerweise erfolgt hier der Präzisionsabformungs-Verfahrensabschnitt unmittelbar nach dem Individualisierungs-Verfahrensabschnitt. Erfindungsgemäß bewirkt die zusätzlich in den Abformlöffel eingebrachte knetbare Abformmasse einen besonders hohen Staudruck, der darüber hinaus über eine verhältnismäßig lange Zeitspanne wirksam bleibt. Das beruht darauf, daß die knetbare Abformmasse beim Aufdrücken des Abformlöffels gleichsam wie ein Stempelkissen wirkt und, je nach der Geschwindigkeit, mit der der Abformlöffel aufgedrückt wird, ein wenig nachfedert und den Staudruck über eine längere Zeitspanne aufrechterhält. Auf diese Weise werden die sulci marginales ein wenig erweitert und dringt die weniger viskose Abformmasse in die feinsten Vertiefungen und bildet sie auch diese deutlich und mit hoher Präzision ab. Das alles ist besonders ausgeprägt, wenn nach bevorzugter Ausführungsform die knetbare Abformmasse und die weniger viskose Abformmasse so eingestellt werden, daß sie im Mund des Patienten gleichzeitig erhärten, und zwar mit Praktisch übereinstimmender Endhärte. Zur Durchführung der zuletzt beschriebenen Verfahrensweise im einzelnen bestehen mehrere Möglichkeiten. Zu besonders guten Ergebnissen kommt man, wenn durch das Aufdrücken des voll individualisierten, mit der knetbaren Abformmasse und der weniger viskosen Abfrommasse versehenen Abformlöffels mittels der manuellen Kräfte des Praktikers die sulci marginales an den Zähnen des Patienten erweitert werden und von der weniger viskosen Abformmasse voll ausgefüllt werden. Es versteht sich, daß dabei mit einer Abformmasse gearbeitet werden muß, deren Viskosität niedrig genug ist, um die sulci marginales feinzeichnend abzubilden. Die sulci marginales lassen sich dabei ohne den geringsten Traumatismus erweitern. Die Erweiterung der sulci marginales beruht auf der beschriebenen Staudruck- und der damit einhergehenden Stempelwirkung. Zu sehr eindrucksvollen Ergebnissen kommt man auch, wenn durch das manuelle Aufdrücken des voll individualisierten, mit der knetbaren und der weniger viskosen Abformmasse versehenen Abformlöffels die beiden Massen im Bereich ihrer Kontaktfläche miteinander verfließen. Das läßt sich an der fertigen Abformung feststellen. - Optimierende Einzelheiten sind Gegenstand der Patentansprüche 10 bis 11.

Sämtliche Viskositätsmessungen beziehen sich auf Messungen in einem Bohlin-Viskosimeter Typ 88 mit dem Meßsystem Nr. 7 (Spindeldurchmesser 14 mm, Becherdurchmesser 33 mm) bei einer Antriebsdrehzahl im Bereich von 0,67 bis 0,75 sec⁻¹ sowie einer Meßtemperatur zwischen 21,5 und 22,5°C. Es ist zu betonen, daß der technische Gesamterfolg der Erfindung dadurch erreicht wird, daß für den Individualisierungs-Verfahrensabschnitt und den Präzisionsabdrucknahme-Verfahrensabschnitt vorstehend charakterisierte niederviskose und hochviskose Abdruckmassen eingesetzt werden.

Im folgenden wird die Erfindung anhand einer lediglich ein Ausführungsbeispiel darstellenden Zeichnung ausführlicher erläutert. Dabei zeigen
- Fig. 1a und 1b: die Aufsicht auf einen Unterkieferabdrucklöffel (Fig. 1a) sowie auf einen Oberkieferabdrucklöffel (Fig. 1b), welche zur Durchführung des erfindungsgemäßen Verfahrens am meisten geeignet sind,
- Fig. 2a und 2b: einen Schnitt in der Ebene A-A durch Abdrucklöffel der Fig. 1a, 1b, welche im Zuge des Präzisionsabdrucknahme-Verfahrensabschnittes auf einen Unterkiefer (Fig. 2a) sowie einen Oberkiefer (2b) aufgedrückt sind.

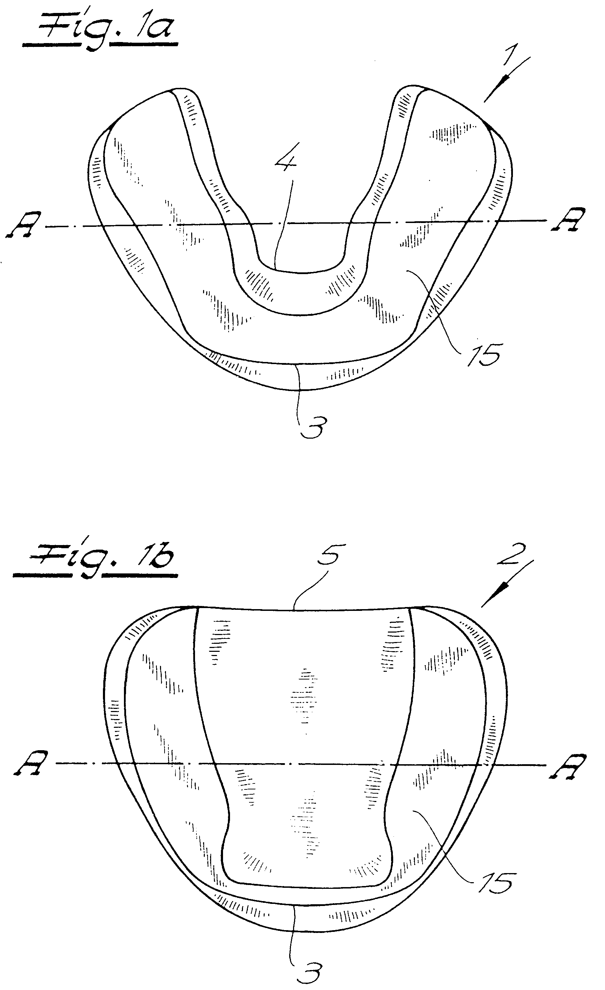

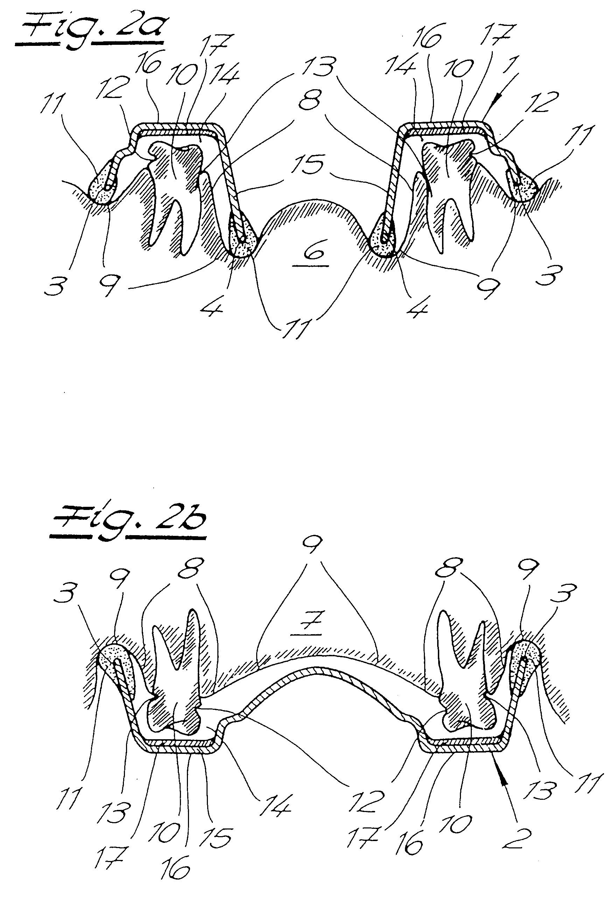

Die in den Figuren dargestellten Abdrucklöffel 1, 2 sind für bezahnte menschliche Kiefer 6, 7 bestimmt und aus der Literaturstelle DE-PS 33 44 774 bekannt. Man entnimmt der Fig. 1a, 1b einen Unterkieferabdrucklöffel 1 und einen Oberkieferabdrucklöffel 2, welche einen mundvorhofseitigen Rand 3 aufweisen. Der Unterkieferabdrucklöffel 1 weist ferner einen zungenseitigen Rand 4 auf, während der Oberkieferabdrucklöffel 2 einen palatinalen Rand 5 aufweist. Beide Abdrucklöffel besitzen einen Formmantel 15, welcher im Bereich der Zahnreihe einen im wesentlichen U-förmigen Rinnenquerschnitt hat. Die Fig. 2a, 2b ist eine Darstellung eines Unterkieferabdrucklöffels 1 bzw. eines Oberkieferabdrucklöffels 2 in den in der Fig. 1a, 1b eingezeichneten Schnittebenen A-A, welche Abdrucklöffel in einem Individualisierungs-Verfahrensabschnitt individualisiert worden sind und nunmehr im Zuge des Präzisionsabdrucknahme-Verfahrensabschnittes auf einen Unterkiefer 6 bzw. Oberkiefer 7 aufgedrückt sind. Die Kiefer 6, 7 weisen die Zahnreihen 10 auf, an welchen sich ein Kieferbereich mit unbeweglichen Schleimhäuten 8 unmittelbar anschließt. In größerem Abstand von den Zahnreihen 10 sind die beweglichen Schleimhäute 9 angeordnet. Der individualisierte Unterkieferabdrucklöffel 1 in der Fig. 2a weist an seinem mundvorhofseitigen Rand 3 und seinem zungenseitigen Rand 4 Wülste der ausgehärteten hochviskosen Abdruckmasse 11 auf, welche dicht und dem individuellen Unterkiefer 6 angepaßt an den beweglichen Schleimhäuten 9 und den Umschlagfalten anliegen. In der Fig. 2b ist aufgrund des gewählten Schnittes A-A lediglich der mundvorhofseitige Rand 3 des Oberkieferabdrucklöffels 2 erkennbar. Der palatinale Rand 5 des Oberkieferabdrucklöffels 2 liegt außerhalb der Zeichenebene. In der Fig. 2b erkennt man in Analogie zur Fig. 2a auf dem mundvorhofseitigen Rand 3 des Oberkieferabdrucklöffels 2 eine Wulst 11 der ausgehärteten hochviskosen Abdruckmasse, welche dicht und dem individuellen Oberkiefer 7 angepaßt an den beweglichen Schleimhäuten 9 anliegt. Ein Formraum 14, welcher durch den Formmantel 15 eines Abdrucklöffels 1 bzw. 2, den wulstförmigen Rändern 11 des voll individualisierten Abdrucklöffels 1 bzw. 2 aus ausgehärteter hochviskoser Abdruckmasse und dem Kiefer 6 bzw. 7 gebildet wird, ist in dem dargestellten Präzisionsabdrucknahme-Verfahrensabschnitt mit einer niederviskosen Abdruckmasse gefüllt. Nach dem Mobilisieren der beweglichen Schleimhäute 9 durch den Patienten ist die niederviskose Abdruckmasse durch den hydraulischen Druckaufbau in beispielhaft dargestellte Höhlungen 12 und Hinterschneidungen 13 hineingedrückt worden. Im Bereich der Höhlungen 12 und Hinterschneidungen 13 sind nach dem Aushärten der niederviskosen Abdruckmasse gleichsam Formschlußelemente aus niederviskoser Abdruckmasse und Formschlußausnehmungen, welche durch die Höhlungen und Hinterschneidungen 12, 13 gebildet sind, ineinandergefügt. Die ausgehärtete niederviskose Abdruckmasse ist mit dem Abdrucklöffel 1 bzw. 2 nur unter elastischer Deformation entfernbar. Da die niederviskose Abdruckmasse eine besonders niedrige Endhärte nach dem Aushärten aufweist, ist für das Entfernen des Abdrucklöffels 1 bzw. 2 vom Kiefer 6 bzw. 7 nach dem Aushärten der niederviskosen Abdruckmasse ein nur geringer Kraftaufwand notwendig. - Insoweit erläutern die Figuren die Maßnahmen für das Verfahren nach den Ansprüchen 1 bis 5.

Man erkennt in den Fig. 2a und 2b auch die Maßnahmen, auf die sich die Ansprüche 6 bis 11 beziehen. Der Abformraum 14, welcher durch den Formmantel 15 eines Abformlöffels 1 bzw. 2, den wulstförmigen Rändern 11 des voll individualisierten Abformlöffels 1 bzw. 2 aus ausgehärteter knetbarer Abformmase und dem Kiefer 6 bzw. 7 gebildet wird, ist im Bereich des Rinnenbodens 16 mit der knetbaren und aushärtbaren Abformmasse 17 bekleidet. Diese wurde in dem Vorbereitungs-Verfahrensabschnitt gemäß Anspruch 6 aufgebracht. Bei der Abnahme der Präzisionsabformung wird in dem dargestellten Präzisionsabformungs-Verfahrensabschnitt mit einer weniger viskosen Abformmasse gefüllt. Durch die Positionierung des Abformlöffels im Munde und nach dem Mobilisieren der beweglichen Schleimhäute 9 durch den Patienten ist die weniger viskose Abformmasse durch den hydraulischen Druckaufbau in beispielhaft dargestellte Höhlungen 12 und Hinterschneidungen 13 hineingedrückt worden. Im Bereich der Höhlungen 12 und Hinterschneidungen 13 sind nach dem Aushärten der weniger viskosen Abformmasse gleichsam Formschlußelemente aus weniger viskoser Abformmasse und Formschlußausnehmungen, welche durch die Höhlungen und Hinterschneidungen 12, 13 gebildet sind, ineinandergefügt. Die ausgehärtete knetbare und die weniger viskose Abformmasse sind mit dem Abformlöffel 1 bzw. 2 nur unter elastischer Deformation entfernbar. Da die weniger viskose Abformasse sowie auch die knetbare Abformmasse eine besonders niedrige Endhärte nach dem Aushärten aufweist, ist für das Entfernen des Abformlöffels 1 bzw. 2 vom Kiefer 6 bzw. 7 nach dem Aushärten der knetbaren und weniger viskosen Abformmassen ein nur geringer Kraftaufwand notwendig. Das Aufdrücken des Abformlöffels bei der Präzisionsabformung geht einher mit den vorstehend beschriebenen Staudruck- und Stempelkisseneffekten.

Es versteht sich, daß die beschriebenen Viskositäten und die Knetbarkeit sich auf den Anfangszustand der aushärtbaren Massen beziehen. Im übrigen läßt sich auch eine Angabe zur Konsistenz machen: Die knetbare Abformmasse 17 hat zweckmäßigerweise eine Konsistenzscheibe von 21.5 mm, gemessen nach der U.S.-Spezifikation A.D.A. Spec. 19 A.

## Patentansprüche

1. Verfahren zum Herstellen eines Abdruckes von einem bezahnten menschlichen Kiefer (6, 79) mit im unmittelbaren Bereich des Zahnbogens unbeweglichen und über eine Aktionsgrenze anschließenden beweglichen Schleimhäuten (9), mit Hilfe eines Abdrucklöffels (1 bzw. 2), welcher einen mundvorhofseitigen Rand (3) und einen zungenseitigen oder palatinalen Rand (4 bzw. 5) sowie einen rinnenförmigen Formmantel (15) aufweist, im Zuge der Herstellung von Zahnersatz für einen Patienten, wobei der Abdrucklöffel mit einer aushärtbaren Abdruckmasse gefüllt, mit dem mundvorhofseitigen Rand sowie dem zungenseitigen bzw. palatinalen Rand jenseits der Aktionsgrenze an den beweglichen Schleimhäuten anliegend auf den bezahnten menschlichen Kiefer gedrückt und nach dem Aushärten der Druckmasse zusammen mit der Abdruckmasse wieder entfernt wird, **dadurch gekennzeichnet**, daß in einem der Abdrucknahme vorgeschalteten Individualisierungs-Verfahrensabschnitt zumindest im Bereich des mundvorhofseitigen Randes (3) und des zungenseitigen oder palatinalen Randes (4 bzw. 5) des Abdrucklöffels (1 bzw. 2) eine hochviskose aushärtbare Abdruckmasse umlaufend aufgetragen wird, die eine Viskosität im ungehärteten Zustand von höher als 200 Pa · s und eine Endhärte von etwa 50 Shore A aufweist, wobei der Abdrucklöffel (1 bzw. 2) dann mit dem mundvorhofseitigen Rand (3) sowie dem zungenseitigen bzw. palatinalen Rand (4 bzw. 5) jenseits der Aktionsgrenze an die beweglichen Schleimhäute (9) angedrückt wird und nach dem Aushärten der hochviskosen Abdruckmasse der Abdrucklöffel (1 bzw. 2) zusammen mit der Abdruckmasse vom Kiefer entfernt wird,
wodurch ein nach Maßgabe des Kiefers des Patienten halbindividueller Abdrucklöffel in einen voll individualisierten Abdrucklöffel umgewandelt wird,
und daß in einem folgenden Präzisionsabdrucknahme-Verfahrensabschnitt der Formmantel (15) des voll individualisierten Abdrucklöffels mit einer niederviskosen aushärtbaren Abdruckmasse gefüllt wird, die eine Viskosität im ungehärteten Zustand von weniger als 160 Pa·s und eine Endhärte von weniger als 30 Shore A aufweist, der voll individualisierte Abdrucklöffel dann mit dem mundvorhofseitigen Rand (3) sowie dem zungenseitigen bzw. palatinalen Rand (4 bzw. 5) jenseits der Aktionsgrenze an den beweglichen Schleimhäuten (9) anliegend auf den Kiefer (6 bzw. 7) aufgedrückt wird, der Patient danach veranlaßt wird, die beweglichen Schleimhäute (9) zu mobilisieren, und nach dem Aushärten der niederviskosen Abdruckmasse der individualisierte Abdrucklöffel zusammen mit der Abdruckmasse vom Kiefer entfernt wird, wobei das Aushärten der niederviskosen Abdruckmasse nach der Maßgabe erfolgt, daß eine Endhärte von 30 Shore A nicht überschritten wird.

2. Verfahren nach Anspruch 1, dadurch gekennzeichnet, daß in dem Individualisierungs-Verfahrensabschnitt die hochviskose aushärtbare Abdruckmasse wulstförmig umlaufend auf den mundvorhofseitigen Rand (3) sowie den zungenseitigen bzw. palatinalen Rand (4 bzw. 5) des Abdrucklöffels aufgetragen wird.

3. Verfahren nach Anspruch 1 oder 2, dadurch gekennzeichnet, daß das Aushärten der niederviskosen Abdruckmasse nach der Maßgabe erfolgt, daß eine Endhärte von 30 Shore A, vorzugsweise 25 Shore A und höchstvorzugsweise 20 Shore A, nicht nach oben überschritten wird.

4. Verwendung einer hochviskosen Abdruckmasse aus der Gruppe der Polyvinylpolysiloxane mit einer Viskosität im ungehärteten Zustand größer als 200 Pa · s und einer Endhärte im ausgehärteten Zustand im Bereich von 55 Shore A bis 75 Shore A, zur Durchführung des Verfahrens nach einem der Ansprüche 1 bis 3.

5. Verwendung einer niederviskosen Abdruckmasse aus der Gruppe der Polyvinylpolysiloxane mit einer Viskosität im ungehärteten Zustand kleiner als 160 Pa · s und einer Endhärte im ausgehärteten Zustand kleiner als 30 Shore A, vorzugsweise kleiner als 25 Shore A und höchstvorzugsweise kleiner als 20 Shore A, zur Durchführung des Verfahrens nach einem der Ansprüche 1 bis 3.

6. Verfahren nach einem der Ansprüche 1 bis 5, dadurch gekennzeichnet, daß zur Vorbereitung des folgenden Präzisionsabformungs-Verfahrensschrittes der Rinnenboden des rinnenbodenförmigen Formmantels (15) zuerst in einem Vorbereitungs-Verfahrensabschnitt mit einer knetbaren und aushärtbaren Abformmasse (17) bekleidet wird,
daß in einem folgenden Präzisionsabformungs-Verfahrensabschnitt auf diese knetbare Abformmasse des Abformlöffels die weniger viskose, aushärtbare Abformmasse aufgebracht und der Formmantel damit gefüllt wird, wobei der so vorbereitete Abformlöffel danach mit dem mundvorhofseitigen Rand (3) sowie dem zungenseitigen bzw. palatinalen Rand (4 bzw. 5) jenseits der Aktionsgrenze an den beweglichen Schleimhäuten (9) anliegend auf den Kiefer unter Überwindung des sich ausbildenden Staudruckes aufgedrückt wird, der Patient danach veranlaßt wird, die beweglichen Schleimhäute (a) zu mobilisieren, und daß nach dem Aushärten der knetbaren Abformmasse und der weniger viskosen Abformmasse der individualisierte Abformlöffel zusammen mit der knetbaren Abformmasse und der weniger viskosen Abformmasse vom Kiefer entfernt wird, wobei das Aushärten der beiden Abformmassen mit der Maßgabe erfolgt, daß eine Endhärte von 30 Shore A nicht überschritten wird.

7. Verfahren nach Anspruch 6, dadurch gekennzeichnet, daß die knetbare Abformmasse und die weniger viskose Abformmasse so eingestellt werden, daß sie im Mund des Patienten gleichzeitig erhärten, und zwar mit praktisch übereinstimmender Endhärte.

8. Verfahren nach einem der Ansprüche 6 oder 7, dadurch gekennzeichnet, daß durch das Aufdrücken des voll individualisierten, mit der knetbaren und der weniger viskosen Abformmasse versehenen Abformlöffels mittels der manuellen Kräfte des Praktikers die sulci marginales an den Zähnen des Patienten erweitert werden und von der weniger viskosen Abformmasse voll ausgefüllt werden.

9. Verfahren nach einem der Ansprüche 6 oder 7, wobei das manuelle Aufdrücken des voll individualisierten, mit der knetbaren und der weniger viskosen Abformmasse versehenen Abformlöffels genügt, um die beiden Massen im Bereich ihrer Kontaktflächen miteinander verfließen zu lassen.

10. Verfahren nach einem der Ansprüche 6 bis 9, wobei die knetbare Abformmasse in ihrer Schichtdicke von 2 bis 3 mm auf den Rinnenboden des Formmantels aufgebracht wird.

11. Verfahren nach einem der Ansprüche 6 bis 10, dadurch gekennzeichnet, daß die knetbare Abformmasse (17) eine Viskosität von höher als 200 Pa · s und eine Endhärte von weniger als 30 Shore A aufweist.

## Claims

1. A process for the preparation of an impression of a toothed human jaw (6, 79) having immobile and mobile mucous membranes (9), the immobile mucous membranes being in the immediate vicinity of the dental arch, the mobile mucous membranes adjoining the immobile mucous membranes by way of an action boundary, by means of an impression tray (1, 2 respectively) having a labial edge (3), a lingual edge (4) or a palatal edge (5) and a trough-like moulding part (15), during preparation of a dental prosthesis for a patient, the impression tray being filled with a setting impression material and being so pressed on to the toothed human jaw that the labial edge and lingual or palatal edge engage the mobile mucous membranes beyond the action boundary, the impression tray being removed together with the impression material after the setting thereof, characterised in that in an individualisation process stage preceding impression-taking a high-viscosity setting impression material is applied peripherally at least in the region of the labial edge (3) and lingual edge (4) or palatal edge (5) of the impression tray (1, 2 respectively), the said material having a viscosity in the unset state of more than 200 Pa · s and a final hardness of approximately 50 Shore A, the impression tray (1, 2 respectively) then being pressed on to the mobile mucous membranes (9) beyond the action boundary by way of the labial edge (3) and the lingual edge (4) or palatal edge (5), the impression tray (1, 2 respectively) together with the impression material being removed from the jaw after the setting of the high-viscosity impression material,
so that a semi-individual impression tray devised from the patient's jaw is converted into a fully individualised impression tray,
and in that in a subsequent precision impression-taking process stage the moulding part (15) of the fully individualised impression tray is filled with a low-viscosity setting impression material having a viscosity in the unhardened state of less than 160 Pa · s and a final hardness of less than 30 Shore A, whereafter the fully individualised impression tray is so pressed on to the jaw (6, 7 respectively) by way of the labial edge (3) and the lingual edge (4) or palatal edge (5) as to engage the mobile mucous membranes (9) beyond the action boundary, whereafter the patient is caused to mobilise the mobile mucous membranes (9), and after the setting of the low-viscosity impression material the individualised impression tray together with the impression material is removed from the jaw, setting of the low-viscosity impression material proceeding in such manner that a final hardness of 30 Shore A is not exceeded.

2. A process according to claim 1, characterised in that in the individualisation process stage the high-viscosity setting impression material is applied as a peripheral bead to the labial edge (3) and lingual edge (4) or palatal edge (5) of the impression tray.

3. A process according to claim 1 or 2, characterised in that the setting of the low-viscosity impression material proceeds in such manner that a final hardness of 30 Shore A, preferably 25 Shore A and most preferably 20 Shore A, is not exceeded.

4. Use of a high-viscosity impression material from the group of the polyvinyl polysiloxanes having an unset viscosity of more than 200 Pa · s and a final hardness when set in the range of 55 to 75 Shore A, for the practice of the process according to any of claims 1 to 3.

5. Use of a low-viscosity impression material from the group of the polyvinyl polysiloxanes having an unset viscosity less than 160 Pa · s and a final hardness when set of less than 30 Shore A, preferably less than 25 Shore A and most preferably less than 20 Shore A, for the practice of the process according to any of claims 1 to 3.

6. A process according to any of claims 1 to 5, characterised in that in preparation for the subsequent precision impression-taking process stage the base of the moulding part (15) in the form of a trough base is first coated in a preparatory process stage with a kneadable and setting impression material (17), and in that
in a subsequent precision impression-taking process stage the lower-viscosity setting impression material is applied to said kneadable impression material of the impression tray and the moulding part (15) is filled therewith, the impression tray thus prepared then being so pressed on to the jaw, overcoming the dynamic pressure evolved, by way of the labial edge (3) and lingual edge (4) or palatal edge (5) as to engage the mobile mucous membranes (9) beyond the action boundary, whereafter the patient is caused to mobilise the mobile mucous membranes (a), and in that after the setting of the kneadable impression material and of the lower-viscosity impression material the individualised impression tray together with both such impression materials is removed from the jaw, the setting of the two impression materials so proceeding that a final hardness of 30 Shore A is not exceeded.

7. A process according to claim 6, characterised in that the kneadable impression material and the lower-viscosity impression material are so adjusted as to set in the patient's mouth simultaneously and with a substantially identical final hardness.

8. A process according to claim 6 or 7, characterised in that when the fully individualised impression tray containing the kneadable and lower-viscosity impression materials is pressed on by the manual force of the dentist, the sulci marginales of the patient's teeth are widened and completely filled by the lower-viscosity impression material.

9. A process according to claim 6 or 7, wherein the manual pressing on of the fully individualised impression tray containing the kneadable and the lower-viscosity impression materials is sufficient to make the two materials merge in the region of their contact surfaces.

10. A process according to any of claims 6 to 9, wherein the kneadable impression material is applied in a layer thickness of 2 to 3 mm to the trough base of the moulding part.

11. A process according to any of claims 6 to 10, characterised in that the kneadable impression material (17) has a viscosity above 200 Pa · s and a final hardness of less than 30 Shore A.

## Revendications

1. Procédé pour la production d'une empreinte de mâchoire humaine avec dentition (6, 79) avec des membranes fixes dans la zone proche de l'arcade dentaire et des membranes mobiles (9) rattachées avec une limite d'action, à l'aide d'une cuillère à empreintes (1 et/ou 2) qui présente un bord du côté du vestibule buccal (3) et un du côté de la langue ou du bord du palais (4 et/ou 5), ainsi qu'une enveloppe malléable en forme de rigole (15), dans le cadre de la fabrication de prothèse dentaire pour un patient, la cuillère à empreintes étant remplie d'une matière moulable durcissable avec laquelle le bord du vestibule buccal ainsi que le bord de la langue et/ou du palais s'appuient, au-delà de la limite d'action sur les membranes mobiles, sur la mâchoire humaine avec dentition et, après durcissement de la matière moulable, pouvant être à nouveau retirés avec la matière pour empreintes, **caractérisé par le fait** qu'une matière pour empreintes durcissable à haute viscosité est apportée sur la circonférence totale dans une section de procédé individualisée placée avant la prise d'empreintes au moins dans la partie du bord du vestibule buccal (3) et du côté de la langue ou du bord du palais (4 et/ou 5) de la cuillère à empreintes (1 et/ou 2), matière qui présente une viscosité supérieure à 200 Pa·s à l'état meuble, et une dureté finale d'environ 50 Shore A, la cuillère à empreintes (1 et/ou 2) étant alors appuyée avec le bord du côté du vestibule buccal (3) ainsi que du côté de la langue et/ou du bord du palais (4 et/ou 5) au-delà de la limite d'action sur la membrane mobile (9) et, après durcissement de la matière à empreintes à haute viscosité, dans la cuillère à empreintes (1 et/ou 2), ensemble avec la matière à empreintes pouvant être retirée de la mâchoire,
de sorte qu'une cuillère à empreintes semi-individuelle puisse être transformée en une cuillère à empreintes entièrement individualisée selon la taille de la mâchoire du patient,
et ceci dans une section de procédé de prise d'empreintes de précision suivante de l'enveloppe malléable (15) de la cuillère à empreintes entièrement individualisée et remplie d'une matière durcissable à basse viscosité, c'est-à-dire une viscosité inférieure à 160 Pa·s à l'état meuble, et une dureté finale inférieure à 30 Shore A, la cuillère à empreintes entièrement individualisée est ensuite pressée avec le bord du vestibule buccal (3) ainsi qu'avec le bord de la langue et/ou du palais (4 et/ou 5) au-delà de la limite d'action sur la membrane mobile (9) sur la mâchoire (6 et/ou 7), ce qui pousse le patient à mobiliser les membranes mobiles (9) et, après durcissement de la matière pour empreintes à basse viscosité, la cuillère à empreintes individualisée est retirée de la mâchoire avec la matière portant l'empreinte, le durcissement de la matière à basse viscosité s'effectuant de sorte qu'une dureté finale de 30 Shore A ne soit pas dépassée.

2. Procédé selon la revendication 1, **caractérisé par le fait** que, dans la section de procédé individualisée, la matière pour empreintes à haute viscosité formant un bourrelet sur la circonférence du bord du vestibule buccal (3), ainsi qu'autour du bord de la langue et/ou du palais (4 et/ou 5) est appliquée par la cuillère à empreintes.

3. Procédé selon la revendication 1 ou 2, **caractérisé par le fait** que le durcissement de la matière pour empreintes à basse viscosité ne dépasse pas une dureté finale de 30 Shore A, si possible 25 Shore A et, de préférence, 20 Shore A.

4. Utilisation d'une matière pour empreintes à haute viscosité du groupe des polyvinylpolysiloxanes avec une viscosité à l'état meuble supérieure à 200 Pa·s, et une dureté finale après durcissement dans la plage des 55 Shore A à 75 Shore A, pour l'exécution du procédé selon les revendications 1 à 3.

5. Utilisation d'une matière pour empreintes à basse viscosité du groupe des polyvinylpolysiloxanes avec une viscosité en l'état meuble inférieure à 160 Pa·s et une dureté finale après durcissement inférieure à 30 Shore A, si possible 25 Shore A et, de préférence, 20 Shore A pour l'exécution du procédé selon les revendications 1 à 3.

6. Procédé selon une des revendications 1 à 5, **caractérisé par le fait** que, pour la préparation de l'étape du procédé pour la prise d'empreinte de précision, le fond de la rigole de l'enveloppe malléable en forme de rigole (15) est, lors de la section du procédé pour la prise d'empreinte de précision, enduit d'une matière plastique et durcissable pour empreintes (17),
**par le fait** que, lors d'une section suivante du procédé pour la prise d'empreinte de précision, la matière durcissable pour empreintes durcissable moins visqueuse est appliquée sur cette matière plastique de la cuillère à empreintes et que l'enveloppe malléable en est ainsi remplie, la cuillère pour empreintes ainsi préparée étant ensuite appliquée sur la mâchoire avec le bord du vestibule buccal (3) ainsi qu'avec le bord de la langue et/ou du palais (4 et/ou 5) au-delà de la limite d'action sur les membranes mobiles (9), en dépassant la pression dynamique qui s'est formée, le patient étant ensuite obligé de mobiliser les membranes mobiles (a) et, après durcissement de la matière plastique pour empreintes et de la matière à moindre viscosité de la cuillère pour empreintes individualisée, avec la matière plastique pour empreintes et la matière à moindre viscosité est retirée de la mâchoire, de sorte qu'une dureté finale de 30 Shore A ne soit pas dépassée.

7. Procédé selon la revendication 6, **caractérisé par le fait** que la matière plastique pour empreinte et la matière à moindre viscosité sont préparées de telle sorte qu'elles durcissent simultanément dans la bouche du patient avec une dureté finale pratiquement identique.

8. Procédé selon une des revendications 6 ou 7, **caractérisé par le fait** que la pression de la cuillère pour empreintes remplie entièrement de matière plastique pour empreintes et de matière à moindre viscosité écarte les scissures marginales sur les dents du patient grâce à la force manuelle du praticien, et qu'elle soit ainsi moins remplie de matière à moindre viscosité.

9. Procédé selon une des revendications 6 ou 7, **caractérisé par le fait** que la pression manuelle de la cuillère pour empreintes remplie de matière pour empreintes à moindre viscosité et entièrement individualisée est suffisante pour laisser les deux matières se mélanger dans la zone de leur surface de contact.

10. Procédé selon une des revendications 6 à 9, **caractérisé par le fait** que la matière plastique pour empreintes est appliquée en une épaisseur de 2 à 3 mm sur le fond de la rigole de l'enveloppe malléable.

11. Procédé selon une des revendications 6 à 10, **caractérisé par le fait** que la matière plastique pour empreintes (17) présente une viscosité supérieure à 200 Pa·s et une dureté finale inférieure a 30 Shore A.
